# EUROPEAN PATENT SPECIFICATION

(11) **EP 4 332 851 B1**
(45) Date of publication and mention of the grant of the patent: **05.08.2026**
(21) Application number: 22193500.0
(22) Date of filing: 01.09.2022
(51) Int. Cl.: G06Q 10/00, G01C 21/34, H04W 4/021

(54) **PRODUCTION TIME DESCREPANCY DETECTION**
NACHWEIS VON PRODUKTIONSZEIT-DISKREPANZ
DÉTECTION DE DÉGRADATION DE TEMPS DE PRODUCTION

(43) Date of publication of application: 06.03.2024
(73) Proprietor: VOLVO TRUCK CORPORATION, 405 08 Göteborg (SE)
(72) Inventor: SOHLBERG, Per, 436 52 Hovås (SE); TEGNERED, Daniel, 414 63 Göteborg (SE)
(74) Representative: Zacco Sweden AB

(56) References cited:
- WO-A1-2018/099578
- US-A1- 2012 253 548
- US-A1- 2021 099 828
- YANG YITAO ET AL: "Identifying intercity freight trip ends of heavy trucks from GPS data", TRANSPORTATION RESEARCH PART E: LOGISTICS AND TRANSPORTATION REVIEW, vol. 157, 22 June 2021 (2021-06-22), AMSTERDAM, NL, pages 102590, XP093024104, ISSN: 1366-5545, DOI: 10.1016/j.tre.2021.102590
- MARKHAM GEORGIA ET AL: "Load-Haul Cycle Segmentation with Hidden Semi-Markov Models", 2022 IEEE 18TH INTERNATIONAL CONFERENCE ON AUTOMATION SCIENCE AND ENGINEERING (CASE), IEEE, 20 August 2022 (2022-08-20), pages 447 - 454, XP034215868, DOI: 10.1109/CASE49997.2022.9926488

## Description

### TECHNICAL FIELD

The present disclosure relates to a method of detecting time discrepancies in a repeatable process and to various related aspects.

In particular, but not exclusively the disclosed technology relates to a method of detecting time discrepancies in a repeatable process which requires machinery and/or vehicles, for example, heavy duty vehicle which may have vehicle accessories such as trailers or containers and the like attached, to make repeated trips between specific locations to perform certain tasks. The repeatable process may be, for example, a cyclical or repetitive production process or otherwise repeatable production process. By way of example, such repeatable processes may be performed in a large-scale construction areas and mining areas where vehicles may be moving between different sub-areas which are associated with specific tasks such as, for example, between a loading site, a dumping site, and a refuelling site.

The invention may be useful for vehicles which are autonomous or semi-autonomous. The disclosed invention will be described mainly with respect to vehicles, however, such vehicles may be heavy-duty vehicles, such as semi-trailer vehicles and trucks as well as other types of vehicles such as cars.

### BACKGROUND

In various industry sectors such as, for example, the construction industry, inbound and outbound flows of materials and goods are repeated handled by machinery and vehicles. In the construction industry, different types of material may be handled in different ways, for example, clay may be removed from the ground and so generate an outbound flow whereas the need to use concrete generates an inbound flow. Both flows are repeatable related to activities executed by site assets, for example, heavy duty machinery and vehicles may be loading assets and/or transporting assets.

Recognising problem with production efficiency such as bottle necks in a production process is highly desirable as it may allow improvements to be made to the process which remedy the bottle neck in the short term and in the longer term support sustained improvements in production efficiency. Production monitoring processes are known but can be challenging to implement due to the need for on-site assessment.

The disclosed technology seeks to mitigate, obviate, alleviate, or eliminate various issues known in the art which affect production processes, such as, for example, those mentioned above.
WO 2018099578 A1 discloses a system and method for optimizing traveled routes of a fleet. The method comprises reconstructing routes traveled by vehicles of the fleet based on historical GPS traces of the fleet; determining stops made by the vehicles along the travelled routes; and classifying the stops into work stops and non-work stops; and optimizing routes for the work stops.

### SUMMARY STATEMENTS

Whilst the invention is defined by the accompanying claims, various aspects of the disclosed technology including the claimed technology are set out in this summary section with examples of some preferred embodiments and indications of possible technical benefits.

The disclosed technology provides a way of remotely monitoring repeatable processes such as may occur in production processes. The disclosed technology uses vehicle location and/or vehicle position data (where the vehicle position data includes location and vehicle pose data) which can be automatically obtained from one or more vehicles as they perform a repeatable process to train an Al system to monitor the repeatable process in real-time as well as off-line. This allows, for example, repeatable processes such as production cycles to be remotely analysed and issues such as bottlenecks identified based on discrepancies in the timing information associated with the execution of the production cycles by one or more vehicles.

A first aspect of the disclosed technology relates to a computer-implemented method as defined in claim 1.

The time discrepancies may comprises delays, for example, resulting from traffic jams or other forms of congestion at a site or location which needs to be accessed by the plurality of vehicles as part of a cyclical production process.

Advantageously the method allows for production delays and bottlenecks to be detected in production processes. By detecting where delays are occurring, production process cycles can be made more efficient.

In some embodiments, he repeatable process is a repeatable process performed by a plurality of vehicles which comprises at least one of: a repeatable production process; a repeatable construction site process; a repeatable mining site process; a repeatable factory process; a repeatable harbour process; a repeatable transport depot process; and a repeatable airport process.

In some embodiments, a plurality of vehicle stop locations are determined for the repeatable process, and the location data and time-information define at least one link between two of the plurality of vehicle stop locations.

In some embodiments, the method further comprises indicating the identified one or more time discrepancies in the production via a graphical user interface, GUI provided on a display of an electronic device.

In some embodiments, the repeatable process is a repeatable production process of a large-scale construction, wherein method further comprises, based on the identified one or more time discrepancies in the repeatable production process determining one or more adjustments to the production process from a predetermined set of recommended adjustments of a production of a large-scale construction.

Advantageously, in some embodiments, for example, if the vehicles are a fleet of autonomous vehicles or vehicles following guided trajectories, the adjustments may be implemented automatically to adjust the behaviour of the vehicles to reduce the duration of the time discrepancies.

In some embodiments, the method further comprises, based on the identified one or more time discrepancies in the repeatable production process, determining one or more adjustments to the production process from a predetermined set of recommended adjustments of a production process in a large-scale construction.

In some embodiments, the recommended adjustments are at least in part based on the duration, timing, and location of stops in the repeatable process.

In some embodiments, the recommended adjustments are at least in part based on the location data and timing information of more than one vehicle operating in the vicinity of one of the plurality of vehicles.

In some embodiments, the method further comprises causing an indication of the determined one or more adjustments to the production process via a graphical user interface, GUI to be provided on a display of an electronic device.

Another, second, aspect of the disclosed technology comprises a computer-implemented method of training a machine learning model to determine a number of points-of-interests of a repeatable process, the training method comprising performing the method according to the first aspect of any of its embodiments disclosed herein; and using an output of the comparison of one or more data point subsets of the location data with one or more subsets of data points associated with predetermined points-of-interest to train the machine-learning model to detect points-of-interest.

Another, third, aspect of the disclosed technology comprises a computer-implemented method of training a machine learning model to identify one or more time discrepancies in a repeatable process, the training method comprising performing a method according to the first aspect or any one of its embodiments disclosed herein, and using the output of a comparison of time information associated with one of the determined points-of-interest with time information associated with one or more of the predetermined point-of-interests determined using the method to train the machine learning model to detect time-discrepancies.

Another, fourth, aspect of the disclosed technology relates to a computer program comprising program code means for performing the method of the first aspect or any one of its embodiments disclosed herein when said program is run on one or more processors or on processing circuitry of an apparatus.

Another, fifth, aspect of the disclosed technology relates to a computer program comprising program code means for performing the method of the second aspect or any one of its embodiments disclosed herein when said program is run on one or more processors or on processing circuitry of an apparatus.

Another, sixth, aspect of the disclosed technology relates to a computer program comprising program code means for performing the method of the third aspect or any one of its embodiments disclosed herein when said program is run on one or more processors or on processing circuitry of an apparatus.

Another, seventh, aspect of the disclosed technology relates to an apparatus comprising memory, one or more processors and/or processing circuitry and/or a control system and computer code, wherein the computer code, when loaded from memory and executed by the one or more processors or processing circuitry, for example, under the control of a control system of the apparatus, causes the apparatus to implement a method as claimed in any one of the first, second or third aspects or any of their embodiments disclosed herein..

Another, eighth, aspect of the disclosed technology comprises a computer program product comprising computer-code which when loaded from memory and executed by one or more processors of an apparatus according to the seventh aspect causes the apparatus to implement a method according to the first aspect or any one of its embodiments disclosed herein.

The disclosed aspects and embodiments may be combined with each other in any suitable manner which would be apparent to someone of ordinary skill in the art.

### BRIEF DESCRIPTION OF THE DRAWINGS

Some embodiments of the disclosed technology are described below with reference to the accompanying drawings which are by way of example only and in which:
Figure 1 is an example map image illustrating an repeatable process according to some embodiments of the disclosed technology;
Figure 2 is an example map image which illustrates how different types of nodes can be detected using methods according to some embodiments of the disclosed technology;
Figure 3 illustrates schematically an embodiment of a method of node detection according to some embodiments of the disclosed technology;
Figure 4 is an example map image from which off-road transport cycles can be detected by implementing an embodiment of the method shown in Figures 3A and 3B;
Figure 5 illustrates schematically a method of determining performance metrics for repeatable processes according to an embodiment of the disclosed technology;
Figures 6A to 6C illustrate schematically examples of how paths between nodes may be presented as links according to the disclosed technology;
Figure 7A illustrates a map based cycle along a route linking two destination nodes;
Figure 7B illustrates a model of the production cycle shown in Figure 7A.
Figure 8 is a graph of a median stop time at some sites determined according to some embodiments of the disclosed technology;
Figure 9 and 10 illustrate schematically example embodiments of a method for determining timing discrepancies in production processes according to the disclosed technology; and
Figure 11 illustrates schematically an apparatus for performing an embodiment of the method of Figure 9 and/or 10.

### DETAILED DESCRIPTION

Aspects of the present disclosure will be described more fully hereinafter with reference to the accompanying drawings. The apparatus and method disclosed herein can, however, be realized in many different forms and should not be construed as being limited to the aspects set forth herein. Steps, whether explicitly referred to a such or if implicit, may be re-ordered or omitted if not essential to some of the disclosed embodiments. Like numbers in the drawings refer to like elements throughout.

The terminology used herein is for the purpose of describing particular aspects of the disclosure only, and is not intended to limit the disclosed technology embodiments described herein. As used herein, the singular forms "a", "an" and "the" are intended to include the plural forms as well, unless the context clearly indicates otherwise.

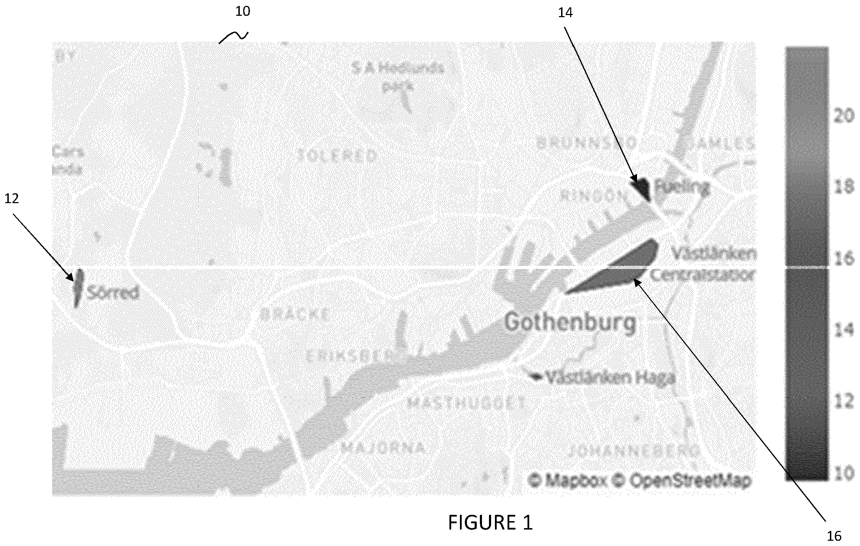

Figure 1 is an example map image illustrating an repeatable process according to some embodiments of the disclosed technology. Figure 1 shows an map image 10 representing an infrastructure project with remote landfills which uses GPS coordinates to find production process nodes comprising, for example, confined sites such as loading sites and delivery sites. Figure 1 illustrates on a map image 10 the location of a fueling node 14, and a dumping or landfill node 12 and loading node 16. The nodes and their inferred type can be derived from the map image, for example, by using the methods disclosed later below and based on their classification as a particular type of node, for example, a loading site node and a land fill node, it is possible to derive one or more performance metrics for the production process.

Examples of performance metrics include, but are not limited to, time spent at each node, in other words, on site by a vehicle, the time for a vehicle to be loaded at a node, the time a loading machine, infrastructure or other type of site asset is utilized or not utilized, historic queue lengths, waiting times, and trip times between nodes. In some embodiments, it is possible to make dynamic assessments of performance metrics and predictions, for example, based on satellite imagery and vehicle GPS tracked co-ordinates,. This supports determining performance metrics in real-time, for example, as well as predictions, of when queues are building up at a site and the likely time for a vehicle to be waiting at the sites etc.

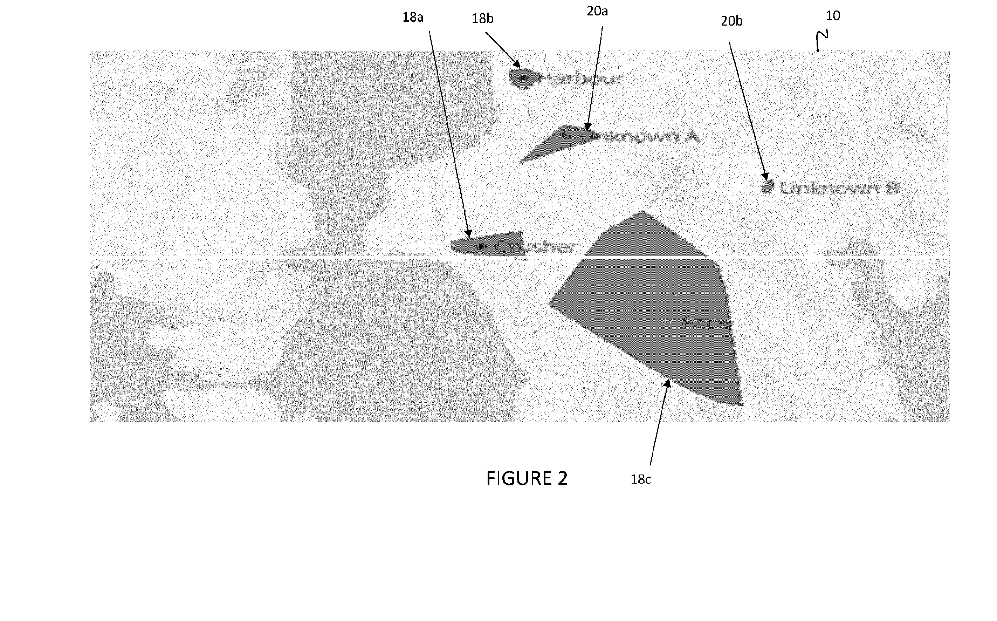

Figure 2 is an example map image which illustrates how different types of nodes can be detected using methods according to some embodiments of the disclosed technology. Examples of the types of confined sites that can be detected using an embodiment of the disclosed method include loading area sites and dump area sites at a mine. Some embodiments of the disclosed methods are configured to locate nodes in a map-based image based on one or both of off-road and on-road vehicle movements.

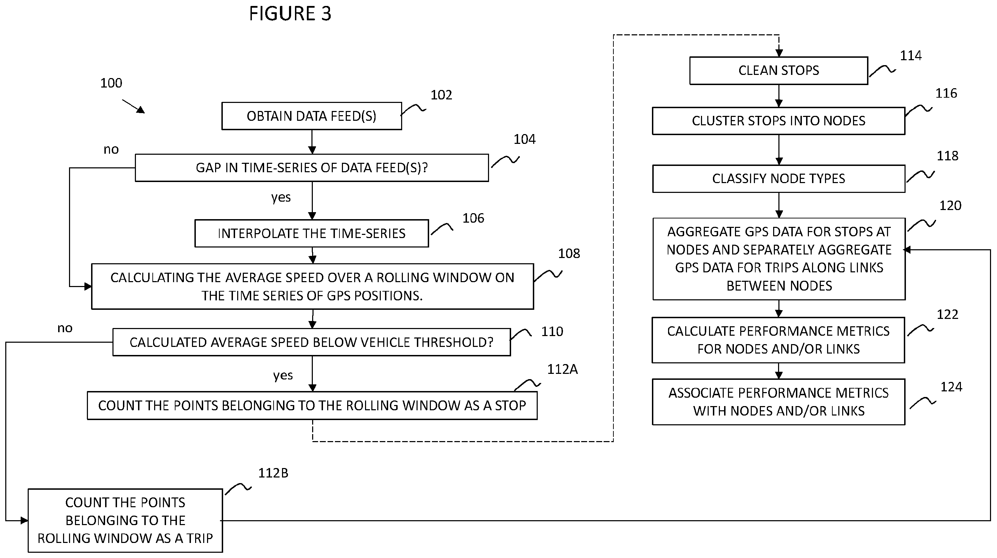

Figures 3 illustrates schematically an embodiment of a method 100 of node detection according to some embodiments of the disclosed technology. In Figure 3 the lefthand side illustrates schematically an embodiment of the method 100 which detecting stops made by one or more site assets, in other words vehicle, operating within a confined site or other type of confined area and moving between confined sites or areas. The stops of the assets are detected by obtaining data feeds from site assets in 102, for example, from vehicle and machinery operating on the site. The data feeds comprise time-series of the assets' GPS positions. If a longer stop (where the power might have been turned off) or other gap longer than a particular threshold duration is detected or found in the available GPS time-series signal in 104, the time-series gap is bridged with data from either side of the gap using a suitable interpolation technique in 106. The method then calculates the average speed over a rolling window on the time-series of GPS positions in 108. If the calculated speed is determined to be below a configurable threshold (different depending on the type of vehicle) in 110, the points belonging to the rolling window are counted as a stop in 112A. The method then calculates the average speed over a rolling window on the time-series of GPS positions in 108. If the calculated speed is determined to be above the configurable threshold (different depending on the type of vehicle) in 110, the points belonging to the rolling window are counted as a trip in 112B.

Once a sufficient amount of stop data has been obtained, the method 100 continues on the left hand side with the stop data being cleaned in 114, for example, using one of the data cleaning techniques described in more detail below. Unsupervised learning clustering algorithms are then used to cluster the stops into nodes (for example, loading site nodes and delivery site nodes) in 116. The GPS data belonging to the stops and trips along links between the stops can then be aggregated in 118 and performance metrics such as key performance indicators, KPIs, calculated in 120. This data can then be further aggregated to the nodes and links connecting the nodes in 122, and the calculated performance metrics associated with nodes and/or links in 124.

As shown on the right-hand side of Figure 3, before the data is processed for node and link detection by an Al-model, it is suitably pre-processed or cleaned in 114. A number of data pre-processing/cleaning techniques are known in the art for example, stops and trips that are under a specified duration can be removed and the included GPS positions instead merged with the adjacent trips or stops. Stops not belonging to a node that is under a specified duration can be removed and become part of the adjacent trips (useful to remove traffic stops). Trips within a node that are under a specified distance can optionally be removed and become part of the stop. Based on the time of day and duration of the stops, lunch stops can be detected. In addition stops that are a result of bad GPS data (for example when entering tunnels) can be removed.

It is also possible to set different levels of speed thresholds for asset movement, for example, vehicle movement, to be regarded as a trip along a route instead of a rest or stop on that route. In some embodiments this is based on a based on a statistical percentile of a speed of an asset, for example, the statistical variation of detected speeds of a vehicle. The threshold set for an asset such as, for example a vehicle, to be regarded by the model as moving may also be based on the asset type and/or model. For example, heavy-duty vehicles which are digging and transporting assets may have a normal distribution of speed of, for example, 10 kmph, in which case the threshold for that heavy-duty vehicle to be considered at rest (in other words, that it is stopped) may be set to less than 10% or 20% of this normal speed distribution, for example, 1 or 2 kmph. In contrast, some types of heavy-duty loading vehicles may have a median speed of 30 kmph, and this may be modelled with a threshold stop speed at the same 10% of the median speed limit to a speed less than 3 kmph. Stop locations may also be based on where the vehicle remains at the end of a shift as different vehicles. The duration of a "stop" may also be taken into account, in other words, for how long does the vehicle's instant speed drop below the threshold.

It is also possible to see from the map based imagery if a transporting asset is approaching a slower asset etc, as it may have a queue around a slower asset which allows it to be identified appropriately. The type of vehicle at least is identified in some embodiments from image information so that this can be taken into account when modelling its movements.

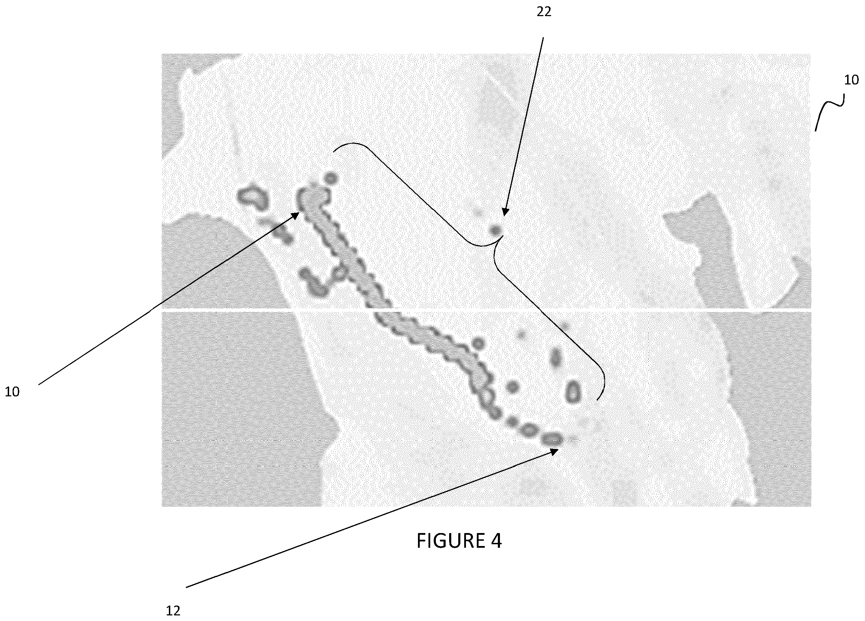

Figure 4 is an example map image from which off-road transport cycles can be detected by implementing an embodiment of the method shown in Figure 3. Figure 4 shows an example of a map image 10 from which off-road transport cycles can be detected using the GPS points labelled stops and labelled trips obtained from the GPS points for a plurality of vehicles according to an embodiment of the disclosed technology. The suitable mathematical model, for example, an Al model which may use a self-learning algorithm, may take the GPS points labelled trips and process them to detect one or more links that connect the nodes. Based on this, the Al model has the capability to learn how a production process, such as, for example, that shown in Figure 4 which is a quarry/open pit mine process, is configured at a confined site.

An example of a suitable pseudocode version of the Al algorithm which may be used now follows:

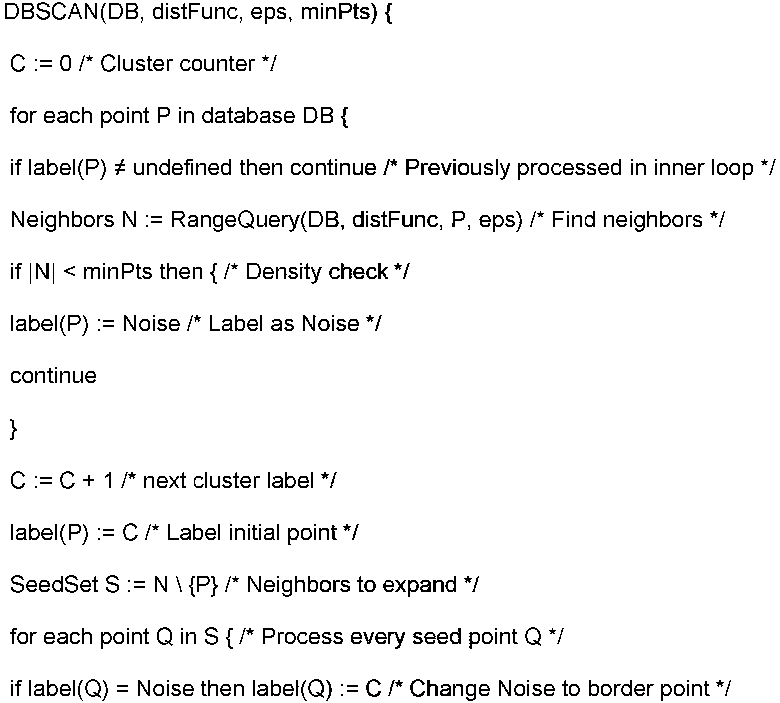

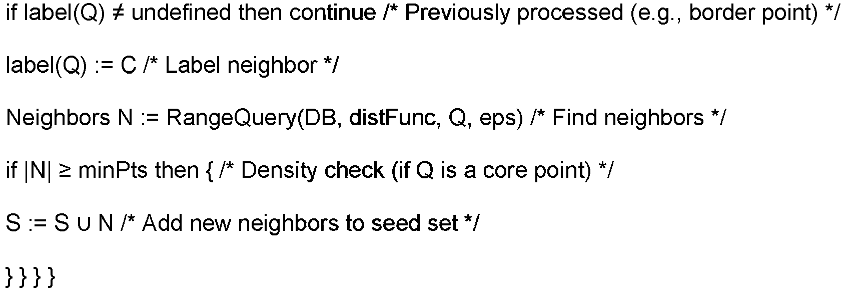

In the above pseudo-code, a point is a core point if it has at least minPts neighbors within eps distance. A point is a border point if it has a core point within eps distance (but not enough neighbors to be a core point), the border point will then be part of the same cluster as its core point neighbor. All other points are noise. To find possible simple cycles (a closed path in a directed graph where no node appears twice), simple_cycles() in the NetworkX was used:
https://networkx.org/documentation/stable/reference/algorithms/generated/networkx.algorith ms.cycles.simple_cycles.html#r155c03fc9e2e-1
It uses Johnson's algorithm: https://en.wikipedia.org/wiki/Johnson%27s_algorithm. Other algorithms may also be used instead in some embodiments, for example, see those listed later herein below.

The points, P, represent location points in a database of GPS coordinates which is fed into the Al algorithm so that it can detect which GPS coordinates are candidates for nodes and which are candidates for links between nodes. As shown in Figure 4, a number of GPS time-series data points are shown which define a path/link 22 between a loading area node 14 and a dumping area node 12.

In some embodiments of the disclosed technology accordingly, a method 500 uses the ML method DBSCAN or a similar ML method to detect clusters of stops in close proximity. These clusters are candidates POIs. The method then comprises building a graph where the candidate POIs are the nodes and the order in which vehicles travel between nodes is used to determine the graph edges. In some embodiments, Johnson's algorithm may be used to find simple cycles in the graph. If these cycles are repeated above a threshold over a certain amount of time, in other words, if the cycles occur enough over time in the data, the method determines that the repeatable cycle is important and the nodes in those cycles are important POIs. Performance metrics and the like can then be assessed by monitoring vehicle movements through and to each POI of the repeatable process.

Advantageously, repeatable production cycles can be identified and the nodes of those production cycles can be detected automatically, in other words, without requiring human interaction in some embodiments. This allows analysis to be conducted more quickly and more reliably than if each candidate POI on a map required human confirmation.

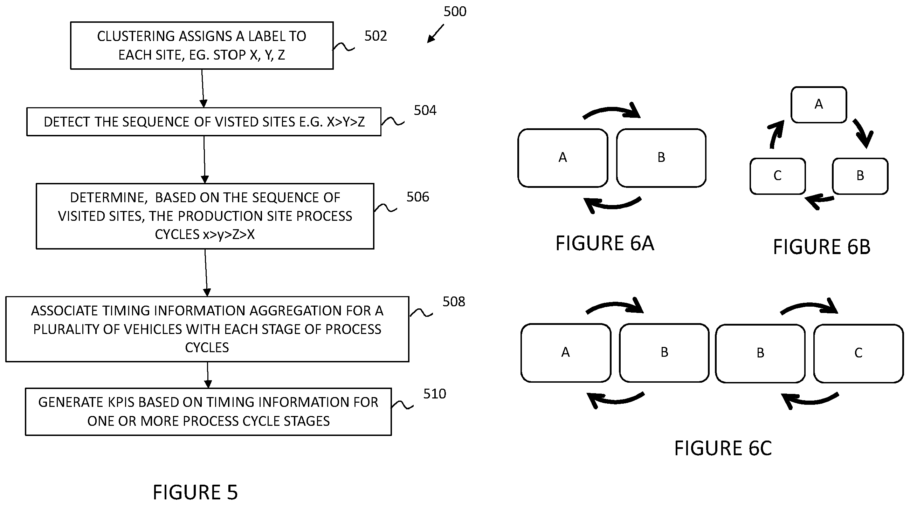

Figure 5 illustrates schematically an embodiment of the method 500 of determining performance metrics for repeatable processes according to an embodiment of the disclosed technology. The method comprises clustering a plurality of GPS point-based data using a suitable method, for example, that shown in Figure 3, and labelling each detected candidate site, for example, as a stop X, Y, Z in 502. Once the candidate POI sites have been verified, for example, by assessing if they meet some sort of confidence threshold, the sequence in which assets are visiting each POI is determined in 504, for example, if vehicles are visiting locations X, Y, Z in the order X, Z, Y. In some embodiments, the sequence may change over time. By way of example, if X is a digging or loading stop location, Y is a crusher site or stop, and Z is a fuelling stop, the sequence of visits may change from Z->X->Y first thing to just X->Y->X etc. during the day until the next refuelling stop is needed. Based on the determined sequence of visited sites, however the production site process cycles are determined (see Figures 6a, 6b, and 6c for an example). This allows timing information to be aggregated and associated with a plurality of assets such as heavy-duty vehicles with each stage of process cycle. Once the timing information for one or more process cycles are known the key performance indicators for each site location and cycle phase can be determined.

Figures 6A to 6B illustrate schematically an example of how paths between nodes may be presented as links according to the disclosed technology. In Figure 6A, a two node production process cycle is illustrated to model a vehicle moving, for example, from a loading site A to a dumping site B and back again. Figure 6B shows a three node production process cycle such as may occur when a vehicle moves from loading site A to dumping site B to refuelling site C. Figure 6C illustrates schematically how a double-node cycle repeatable process may be detected based on the example nodes and links illustrated in Figure 6A.

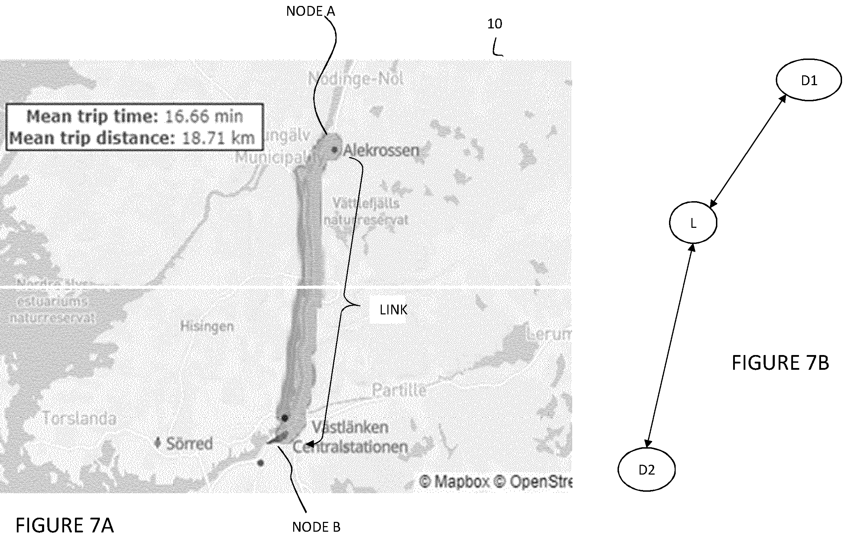

Figure 7A illustrates how GPS and/or similar location tracks of asset movements may be used to identify nodes A and B connected by a link using map image-based data of a two node production process cycle. Figure 7B shows an example where based on a map image, three nodes have been detected, including node L which is not uniquely associated with just one production cycle. In Figure 7B, assets visit loading node L as part of following two separate cycles - one two node cycle comprises assets travelling from L to D1 and back D1 to L and another two node cycle comprises assets moving from node L to D2 and back again.

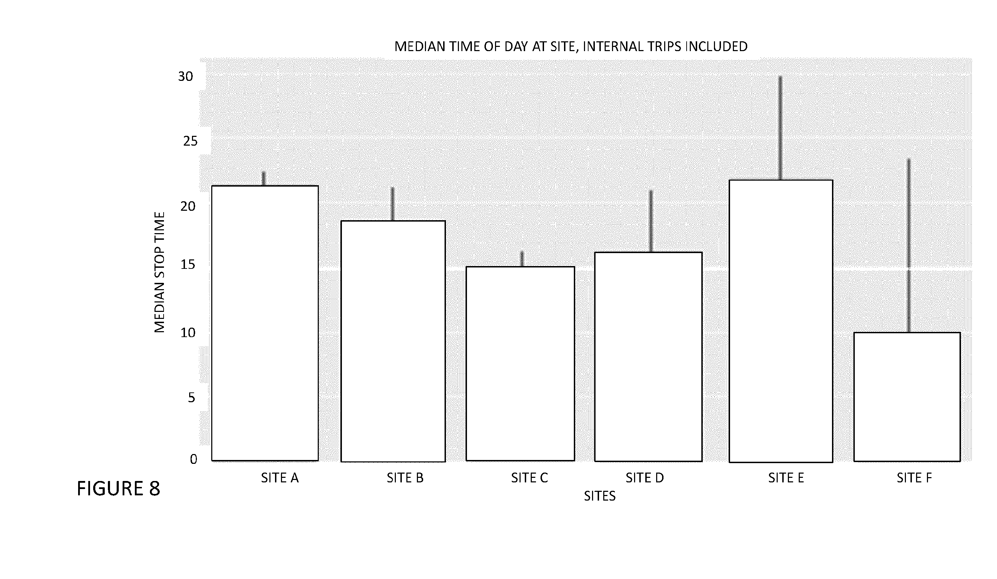

Figure 8 is a graph of a median stop time at some sites determined according to some embodiments of the disclosed technology. This graph shows how embodiments of the disclosed technology provide a holistic view of one or more production processes and not the individual trucks and machines which are used to implement the production processes. The model outputs median stop time as a key performance metric of a production process as this depersonalises the efficiency findings. The focus does not capture a bad behaviour of any particular individual driver and operator of a site asset but instead shows the bad (or good) performance of the process taken as a time-based production cycle. Each production process according to the disclosed technology can be determined based on the links and nodes as determined from their time-series properties and performance metrics. The chart shown in Figure 8 plots median stop times at each site and allows the time spent stopped at a node for at least one vehicle participating in a production process at that site to be compared to similar production cycles at other sites.

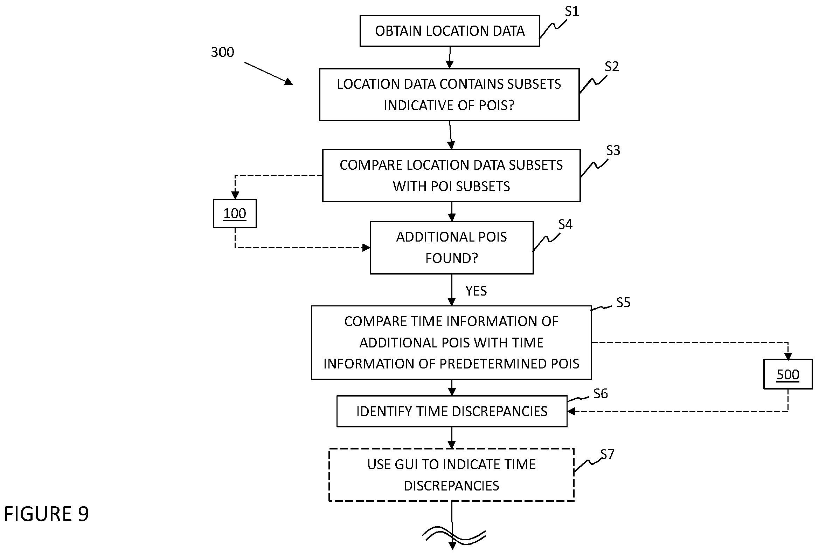

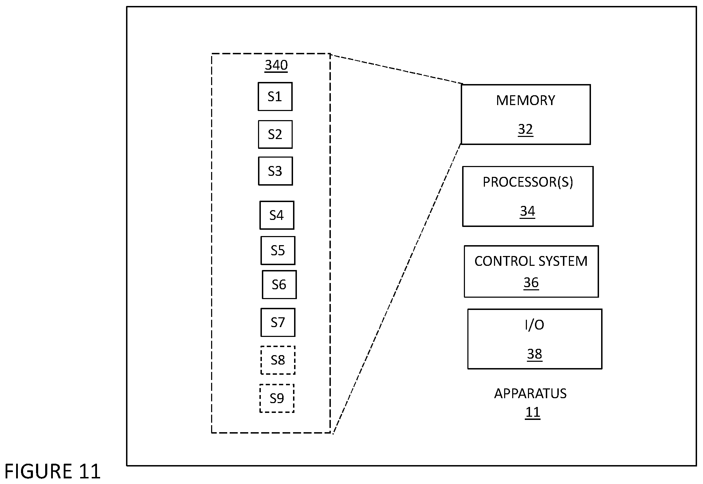

Figure 9 illustrates schematically an example of a method 300 for determining timing discrepancies in production processes according to the disclosed technology, where the output of the method can be used as a metric for the efficiency of the production process. Some examples of the method 300 of Figure 9 may be performed by an apparatus such as that shown in Figure 11 described in more detail later below.

As shown in Figure 9, the computer-implemented method 300 for indicating time discrepancies a production process or a large-scale construction comprises receiving, by one or more processors or processing circuitry, a plurality of data points corresponding to geographical positions of a number of heavy-duty vehicles associated with the production process of the large-scale construction in S1, determining one or more subsets of data points from the plurality of data points, wherein one or more subsets of data points are indicative of at least one point-of-interest for the production process in S2, comparing the one or more subsets of data points with one or more subsets of data points associated with predetermined point-of-interests of a production process of a large-scale construction in S3. Based on an output of the comparison in S3 of the one or more subsets of data points with one or more subsets of data points associated with predetermined point-of-interests of a production process of a large-scale construction, for example points known from performing method 100,, the method further comprises determining a number of points-of-interests of the production process; in S4, comparing time information associated with one of the determined points-of-interest of the production process with time information associated with one or more of the predetermined point-of-interests of the production process of the large-scale construction in S5, for example, found using the method 500, and based on an output of the comparison of time information associated with one of the determined points-of-interest of the production process with time information associated with one or more of the predetermined point-of-interests of the production process of the large-scale construction, identifying one or more time discrepancies in the production process in S6.

Some embodiments of method 300 further comprise indicating the identified one or more time discrepancies in the production via a graphical user interface, GUI provided on a display of an electronic device in S7. Based on the identified one or more time discrepancies in the production, the method may further determine one or more adjustments to the production from a predetermined set of recommended adjustments of a production of a large-scale construction.

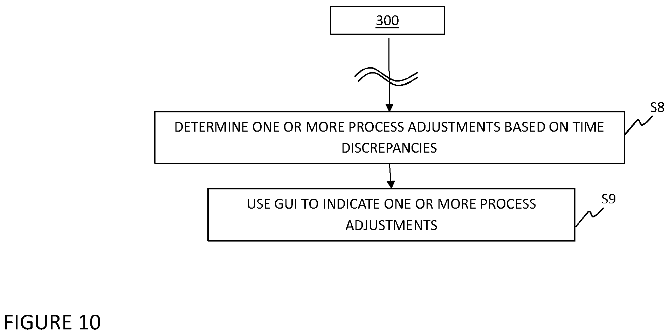

Figure 10 of the accompanying drawings shows schematically how, in some embodiments, the method further comprises, based on the identified one or more time discrepancies in the production in S6, determining one or more adjustments to the production from a predetermined set of recommended adjustments of a production of a large-scale construction in S8. The method may also further comprise indicating the determined one or more adjustments to the production via a graphical user interface, GUI in some embodiments in S9.

In some embodiments, the computer-implemented method 300 may comprise a method for indicating time discrepancies in a repeatable process performed by a plurality of vehicles where the method comprises receiving location data comprising a plurality of data points, each data point corresponding to a time-marked geographical position reported by a vehicle, processing the location data to determine at least one data point subset which is indicative of a point-of-interest, POI, such as for example, a detected node, for the repeatable process, comparing the determined data point subset with one or more data point subsets of associated with predetermined POIs of a repeatable process, and based on an output of the comparison identifying a number of POIs of the repeatable process and comparing time information associated with one of the determined POIs of the repeatable process with time information associated with the one or more predetermined POIs, and, based on an output of the comparison of time information, identifying one or more time discrepancies in the repeatable process.

The repeatable process may be performed by a plurality of vehicles and comprise at least one of: a repeatable production process, a repeatable construction site process, a repeatable mining site process, a repeatable factory process, a repeatable harbour process, a repeatable transport depot process and a repeatable airport process. Such processes involve vehicles performing repetitive tasks at different locations, for example, they may involve generating materials (as in mining) and moving materials and goods around, and fuelling the vehicles to perform the production processes. At least one POI comprises a vehicle stop location in the repeatable process, which may be for example, a loading-location such as a depot, an un-loading location such as a depot, or a refuelling location such as a fuel depot etc.,

By using the method to determine a plurality of vehicle stop locations for the repeatable process, the location data and time-information of those stops can be used define at least one link between two of the plurality of vehicle stop locations.

This allows production cycles to be detected in some embodiments manually by assigning a number of nodes as starting and end points of interest. In some embodiments, however, the cycle detection is fully automatically and obtained by building a directed graph from the nodes located in the location data where the edges in the graph are the trips taken between the nodes. Any suitable algorithms from graph theory known to those of ordinary skill in the art may be used to find the possible cycles within the graph. For example Johnson's algorithm [https://epubs.siam.org/doi/10.1137/0204007] can be used to find all the elementary circuits of the directed graph. As a part of this algorithm, Dijkstra's algorithm is used to compute the shortest path between nodes.

In some embodiments of the method 300, the method further comprises indicating the identified one or more time discrepancies in the production via a graphical user interface, GUI provided on a display of an electronic device.

In embodiments where the repeatable process is a repeatable production process of a large-scale construction, the method 300 may further comprise, based on the identified one or more time discrepancies in the repeatable production process determining one or more adjustments to the production process from a predetermined set of recommended adjustments of a production of a large-scale construction. In some embodiments, based on the identified one or more time discrepancies in the repeatable production process, one or more adjustments to the production process are determined from a predetermined set of recommended adjustments of a production process in a large-scale construction. These recommended adjustments are at least in part based on the duration, timing, and location of stops in the repeatable process.

In some embodiments, the recommended adjustments are at least in part based on the location data and timing information of more than one vehicle operating in the vicinity of the vehicle. For example, it is possible to analyses the timing and location data to determine if vehicle stops are longer than needed or if there seem to be a lot more stops than would be expected along a route. This can be used to identify routes which have bottle necks between two sites in a production process. In addition, by analysing the historic speeds on longer links or segments of such longer links between two nodes, it is possible to determine timing information which may include a time of day and/or days of the week/month etc., for when to make a long trip between two sites. Another benefit of the disclosed technology is that it allows for detect fleet behaviour and queuing behaviour to be analysed. If real-time location information is available for use by the method 300, a timing-discrepancy output of the method can be compared to a threshold value for generating an alert responsive to a real-time detect timing discrepancy in the production process such as a traffic-jam or unforeseeable event causing issues with the production cycle. Such an alert may be communicated to a back-office server if the fleet is operating autonomously or if it is remotely controlled and/or to the vehicles themselves for presenting via a navigation system to a driver of the vehicle. In some embodiments, the method 300 is accordingly performed in real-time based on real-time GPS data feeds. In other embodiments, however, it is possible to perform the method off-line in which case the GPS data feeds the method uses may also be provided off-line. In some embodiments of the method 300, the location data comprises a real-time GPS data feed for each vehicle of the plurality of vehicles.

In some embodiments of the method 300, the method further comprises causing an indication of the determined one or more adjustments to the production process via a graphical user interface, GUI to be provided on a display of an electronic device. The electronic device may be a central server configured to control a plurality or all of the vehicles taking part in the production cycle, for example, where the plurality of vehicles are autonomous or semi-autonomous or remote controlled. Alternatively, or in addition the electronic device may be a navigation system device or component installed in the cockpit of one of the plurality of vehicles.

Another aspect of the disclosed technology comprises a computer-implemented method of training a machine learning model to determine a number of points-of-interests of a production process for a large scale construction, the training method comprising performing an embodiment of the method 300 for indicating time-discrepancies in a production process for a large-scale construction and using an output of a comparison of the one or more subsets of the data points provided as input to the method with the one or more subsets of data points associated with predetermined point-of-interests of a production of a large-scale construction identified using the method to train the machine-learning model in S6A.

According to the disclosed technology, a computer-implemented method of training a machine learning model to identify one or more time discrepancies in a production process for a large scale construction comprises performing a method 300 indicating time-discrepancies in a production process for a large-scale construction and using the output of the comparison of time information associated with one of the determined points-of-interest of the production process with time information associated with one or more of the predetermined point-of-interests of a production of a large-scale construction (see S5 in Figure 9) to train the machine learning model. The computer-implemented method 500 may be implemented using a computer program which includes program code capable of being executed using one or more processors or on processing circuitry of an apparatus such as a server or the like. The computer program code may be stored in a suitable computer program carrier, for example, computer program carrier comprising one of an electronic signal, optical signal, radio signal or computer-readable storage medium.

The apparatus which is used to execute the computer program code 300 may be an apparatus such as that shown in Figure 11, for example, an apparatus 11 comprising memory 32, one or more processors or processing circuitry 34, a control system 36, input/output component I/O 38, for example, a user interface may be provided for input and a display for output in some embodiments, or alternatively or in addition I/O 16 may comprise suitable data ports for connecting to other internal or external sources of input/output equipment. In some embodiments, I/O 16 may comprise a suitable wireless communications transceiver configured to receive and transmit data from the apparatus. The memory 32 may have any suitable form and includes at least memory suitable for storing computer-program code 40, which comprises modules S1 -S7, and may further include options S8 to S9. The modules S1 to S9 comprise computer code which, when loaded from memory 32 and executed by the one or more processors or processing circuitry 34 causes the apparatus 11, under the control of the control system 38, to implement an embodiment of the method 300 shown in Figure 5.

The computer program code may, in some embodiments, be provided as a computer program product comprising computer-code which when loaded from memory and executed by one or more processors of an apparatus causes the apparatus to implement an embodiment of the method 300.

According to the disclosed technology, GPS coordinates and tracking information are used to detect loading area nodes and dump area nodes at a mine or other type of confined area. Nodes of the model used to represent a production process may comprise, for example, loading sites and delivery/off-loading sites. By processing satellite/mapping images, the loading and delivery sites of a production process can be detected, and by processing the images to determine the times a vehicle spends at each site of the production process, for example, times when a vehicle is being loaded or waiting to be loaded, time when the loaded asset is not utilized, other waiting time at a site etc., using satellite images, the efficiency of the production process can be determined.

The assets describe above may comprise a vehicle or other moving equipment within a site in some embodiments. In some embodiments, an asset may be an autonomous vehicle with an ADS configured to make tactical decisions for a control system. In some embodiments, and asset may be a vehicle such as a heavy-duty vehicle, which may be an autonomous heavy-duty vehicle, or a remote controlled heavy-duty vehicle, or be a semi-autonomous or manually controlled heavy-duty vehicle. The heavy-duty vehicle may have one or more vehicle accessories attached such as, for example, a trailer and/or container. A heavy-duty vehicle may comprise a wide range of different physical devices, such as combustion engines, electric machines, friction brakes, regenerative brakes, shock absorbers, air bellows, and power steering pumps. These physical devices are commonly known as Motion Support Devices (MSD). The MSDs may be individually controllable, for instance such that friction brakes may be applied at one wheel, i.e., a negative torque, while another wheel on the vehicle, perhaps even on the same wheel axle, is simultaneously used to generate a positive torque by means of an electric machine. The autonomous operation of a heavy-duty vehicle is accordingly more complex than the autonomous operation of a more light-weight vehicle such as a car.

In embodiments where the methods 100, 200, 300 are appropriately used to identify points-of-interest uses a machine-learning mode, the machine learning model may be trained to determine a number of points-of-interests of a repeatable process by performing the method 300 and using an output of the comparison of one or more data point subsets of the location data with one or more subsets of data points associated with predetermined points-of-interest to train the machine-learning model to detect points-of-interest. For example, the method 100 may use GPS coordinates and tracking information to detect loading area nodes and dump area nodes at a mine or other type of confined area. In some embodiments the nodes of the model are, for example, loading sites and delivery/off-loading sites which are detected by processing satellite/mapping images. Once such loading and delivery sites have been detected, by processing using mapping images, for example, satellite images, it is possible to determining the time spent on site, for example, the time taken to load a truck, the time a loading asset is not utilized, waiting time(s) at site(s) etc. Any suitable technical to recognise objects in satellite images may be suitably adapted to recognise particular types of vehicles to facilitate their tracking.

Some embodiments of the disclosed technology may train a machine learning model to identify one or more time discrepancies in a repeatable process by using method 300 based on output of a comparison of time information associated with one of the determined points-of-interest with time information associated with one or more of the predetermined point-of-interests to train the machine learning model to detect time-discrepancies. For example, in some embodiments, the machine learning model is trained to determine a number of points-of-interests of the production based on the output of a comparison of the one or more subsets of data points with one or more subsets of data points associated with predetermined point-of-interests of a production of a large-scale construction.

The machine learning model may comprises any suitable classification ML model which can be trained to classify an input vector comprising data characteristics and values representing candidate points-of-interest detected using a suitable graph model such as a "POI" or as "Not a POI" for a cyclical production process. Any suitable machine-learning classification model may be used where the candidate POIs are detected.

For example, with data from enough sites a ML model, for example a simple regressor, could be trained based on weight, material, type of equipment to predict how long the process should take.

In some embodiments, however, a different, non- ML model is used to find timing discrepancies at a POI. For example, the variance in the times spent at POIs in the repeatable process can be analysed using a non-ML technique. IF it typically takes a vehcle 5 minutes to travers a POI but sometimes it is taking 25 minutes, the POI can be flagged as having an issue, for example, an alert message could be generated and sent to a remote entity supervising the process in some embodiments. Alternatively, it is possible to manually input a desired time to traverse a POIN, for example, a site operator may preconfigure POIs with desired timings for that step in the cyclical process. Again, if, for example, a vehicle should performing unloading the material given the equipment and material in 5 minutes but it typically takes a vehicle 25 minutes to perform that part of the process, an alert can be issued to flag the timing discrepancy to a relevant party.

Where the disclosed technology is described with reference to drawings in the form of block diagrams and/or flowcharts, it is understood that several entities in the drawings, e.g., blocks of the block diagrams, and also combinations of entities in the drawings, can be implemented by computer program instructions, which instructions can be stored in a computer-readable memory, and also loaded onto a computer or other programmable data processing apparatus. Such computer program instructions can be provided to a processor of a general purpose computer, a special purpose computer and/or other programmable data processing apparatus to produce a machine, such that the instructions, which execute via the processor of the computer and/or other programmable data processing apparatus, create means for implementing the functions/acts specified in the block diagrams and/or flowchart block or blocks.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

The description of the example embodiments provided herein have been presented for the purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements, features, functions, or steps than those listed and the words "a" or "an" preceding an element do not exclude the presence of a plurality of such elements, features, functions, or steps. It should further be noted that any reference signs do not limit the scope of the claims, that the example embodiments may be implemented at least in part by means of both hardware and software, and that several "means", "units" or "devices" may be represented by the same item of hardware.

The various example embodiments described herein are described in the general context of methods, and may refer to elements, functions, steps or processes, one or more or all of which may be implemented in one aspect by a computer program product, embodied in a computer-readable medium, including computer-executable instructions, such as program code, executed by computers in networked environments.

A computer-readable medium may include removable and non-removable storage devices including, but not limited to, Read Only Memory (ROM), Random Access Memory, RAM), which may be static RAM, SRAM, or dynamic RAM, DRAM. ROM may be programmable ROM, PROM, or EPROM, erasable programmable ROM, or electrically erasable programmable ROM, EEPROM. Suitable storage components for memory may be integrated as chips into a printed circuit board or other substrate connected with one or more processors or processing modules, or provided as removable components, for example, by flash memory (also known as USB sticks), compact discs (CDs), digital versatile discs (DVD), and any other suitable forms of memory. Unless not suitable for the application at hand, memory may also be distributed over a various forms of memory and storage components, and may be provided remotely on a server or servers, such as may be provided by a cloud-based storage solution. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

The memory used by any apparatus whatever its form of electronic apparatus described herein accordingly comprise any suitable device readable and/or writeable medium, examples of which include, but are not limited to: any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry. Memory may store any suitable instructions, data or information, including a computer program, software, an application including one or more of logic, rules, code, tables, etc. and/or other instructions capable of being executed by processing circuitry and, utilized by the apparatus in whatever form of electronic apparatus. Memory may be used to store any calculations made by processing circuitry and/or any data received via a user or communications or other type of data interface. In some embodiments, processing circuitry and memory are integrated. Memory may be also dispersed amongst one or more system or apparatus components. For example, memory may comprises a plurality of different memory modules, including modules located on other network nodes in some embodiments.

In the drawings and specification, there have been disclosed exemplary aspects of the disclosure. However, many variations and modifications can be made to these aspects, insofar as they fall within the scope of the accompanying claims. Thus, the disclosure should be regarded as illustrative rather than restrictive in terms of supporting the claim scope which is not to be limited to the particular examples of the aspects and embodiments described above. The invention which is exemplified herein by the various aspects and embodiments described above has a scope which is defined by the following claims.

## Claims

1. A computer-implemented method for indicating discrepancies in time spent at one or more points-of-interest, POIs, in a repeatable process performed by a plurality of vehicles, the method comprising:
receiving location data (S1) comprising a plurality of data points, each data point corresponding to a time-marked geographical position reported by a vehicle, wherein the location data comprises a real-time GPS data feed for each vehicle of the plurality of vehicles;
processing (S2) the location data to determine at least one data point subset which is indicative of a candidate point-of-interest, POI, for the repeatable process, wherein the candidate POI is identified as a cluster of vehicle stop locations detected using an unsupervised learning clustering algorithm;
comparing (S3) the determined data point subset with one or more data point subsets associated with predetermined POIs of a repeatable process;
based on an output of the comparison:
identifying (S4) a number of POIs of the repeatable process, ;
comparing time information (S5) associated with one of the determined POIs of the repeatable process with time information associated with the one or more predetermined POls, and
based on an output of the comparison of time information,
identifying (S6) one or more discrepancies in time spent at one or more POls in the repeatable process,
**characterised in that**
the method comprises building a graph where candidate POIs are nodes and the order in which the vehicles travel between nodes is used to determine graph edges, wherein an algorithm is used to find simple cycles in the graph, and wherein if these cycles are repeated above a threshold over a certain amount of time, the method determines that the nodes in said cycles are said POIs.

2. The method of claim 1, wherein the repeatable process is a repeatable process performed by a plurality of vehicles which comprises at least one of:
a repeatable production process;
a repeatable construction site process;
a repeatable mining site process;
a repeatable factory process;
a repeatable harbour process ;
a repeatable transport depot process; and
a repeatable airport process.

3. The method of claim 1 or claim 2, wherein a plurality of vehicle stop locations are determined for the repeatable process, and the location data and time-information define at least one link between two of the plurality of vehicle stop locations.

4. The method of any one of the previous claims, wherein the method further comprises:
indicating the identified one or more discrepancies in time spent at one or more POIs in the production via a graphical user interface, GUI provided on a display of an electronic device.

5. The method of claim 4, wherein the repeatable process is a repeatable production process performed in a large-scale construction area.

6. The method of claim 5, further comprising:
based on the identified one or more discrepancies in time spent at one or more POIs in the repeatable production process, determining one or more adjustments to the repeatable production process from a predetermined set of recommended adjustments for a repeatable production process in a large-scale construction area.

7. The method of claim 6, wherein the recommended adjustments are at least in part based on the duration, timing, and location of stops in the repeatable process.

8. The method of claim 6 or claim 7, wherein the recommended adjustments are at least in part based on the location data and timing information of more than one vehicle operating in the vicinity of the vehicle.

9. The method of any claim 6, 7 or 8, wherein the method further comprises:
causing an indication of the determined one or more adjustments to the production process via a graphical user interface, GUI to be provided on a display of an electronic device.

10. A computer-implemented method of training a machine learning model to determine a number of points-of-interests of a repeatable process, the training method comprising:
performing a method according to any one of claims 1 to 9; and
using an output of the comparison of one or more data point subsets of the location data with one or more subsets of data points associated with predetermined points-of-interest to train the machine-learning model to detect points-of-interest.

11. A computer-implemented method of training a machine learning model to identify one or more discrepancies in time spent at one or more POIs in a repeatable process, the training method comprising:
performing a method according to any one of claims 1 to 9; and
using the output of a comparison of time information associated with one of the determined points-of-interest with time information associated with one or more of the predetermined point-of-interests to train the machine learning model to detect discrepancies in time spent at one or more POIs.

12. A computer program comprising program code means for performing the method of any one of claims 1 to 9 or 10 or 11 when said program is run on one or more processors or on processing circuitry of an apparatus.

13. An apparatus comprising:
memory;
one or more processors;
a control system; and
computer code,
wherein the computer code, when loaded from memory and executed by the one or more processors configures the control system to cause the apparatus to implement a method as claimed in any one of claims 1 to 9 or 10 or 11.

## Patentansprüche

1. Computerimplementiertes Verfahren zum Anzeigen von Abweichungen bei der an einem oder mehreren Interessensfoki, POIs, verbrachten Zeit in einem wiederholbaren Prozess, der von einer Mehrzahl von Fahrzeugen durchgeführt wird, wobei das Verfahren umfasst:
Empfangen von Standortdaten (S1), die eine Mehrzahl von Datenpunkten umfassen, wobei jeder Datenpunkt einer mit einem Zeitstempel versehenen geografischen Position entspricht, die von einem Fahrzeug gemeldet wird, wobei die Standortdaten einen Echtzeit-GPS-Datenstrom für jedes Fahrzeug der Mehrzahl von Fahrzeugen umfassen;
Verarbeiten (S2) der Standortdaten zum Bestimmen mindestens einer Datenpunktteilmenge, die auf einen Kandidaten-Interessenfokus, Kandidaten-POI, für den wiederholbaren Prozess hinweist, wobei der Kandidaten-POI als Cluster von Fahrzeughalteorten identifiziert wird, die unter Verwendung eines Clustering-Algorithmus des unüberwachten Lernens erkannt werden;
Vergleichen (S3) der bestimmten Datenpunktteilmenge mit einer oder mehreren Datenpunktteilmengen, die vorbestimmten POIs eines wiederholbaren Prozesses zugeordnet sind;
auf der Grundlage einer Ausgabe des Vergleichs:
Identifizieren (S4) einer Anzahl von POIs des wiederholbaren Prozesses;
Vergleichen von Zeitinformationen (S5), die einem der bestimmten POIs des wiederholbaren Prozesses zugeordnet sind, mit Zeitinformationen, die dem einen oder den mehreren vorbestimmten POIs zugeordnet sind; und
auf der Grundlage einer Ausgabe von Zeitinformationen:
Identifizieren (S6) einer oder mehrerer Abweichungen bei der an einem oder mehreren POIs im wiederholbaren Prozess verbrachten Zeit,
**dadurch gekennzeichnet, dass** das Verfahren das Erstellen eines Graphen umfasst, bei dem Kandidaten-POIs Knoten sind und die Reihenfolge, in der die Fahrzeuge zwischen den Knoten verkehren, zur Bestimmung von Graphkanten verwendet wird, wobei ein Algorithmus zum Auffinden einfacher Zyklen in dem Graphen verwendet wird und wobei das Verfahren bestimmt, dass die Knoten in den Zyklen die POI sind, wenn diese Zyklen über einen bestimmten Zeitraum oberhalb eines Schwellenwerts wiederholt werden.

2. Verfahren nach Anspruch 1, wobei der wiederholbare Prozess ein wiederholbarer Prozess ist, der von einer Mehrzahl von Fahrzeugen durchgeführt wird, der mindestens eines umfasst aus:
einem wiederholbaren Produktionsprozess;
einem wiederholbaren Baustellenprozess;
einem wiederholbaren Bergbaustättenprozess;
einem wiederholbaren Fabriksprozess;
einem wiederholbaren Hafenprozess;
einem wiederholbaren Transport-Warenlager-Prozess; und
einem wiederholbaren Flughafenprozess.

3. Verfahren nach Anspruch 1 oder Anspruch 2, wobei eine Mehrzahl von Fahrzeughalteorten für den wiederholbaren Prozess bestimmt wird und die Standortdaten und Zeitinformationen mindestens eine Verbindung zwischen zwei der Mehrzahl von Fahrzeughalteorten definieren.

4. Verfahren nach einem der vorhergehenden Ansprüche, wobei das Verfahren ferner umfasst:
Anzeigen der identifizierten einen oder mehreren Abweichungen bei der an einem oder mehreren POIs in dem Produktionsprozess verbrachten Zeit über eine grafische Benutzerschnittstelle, GUI, die auf einer Anzeige einer elektronischen Vorrichtung bereitgestellt wird.

5. Verfahren nach Anspruch 4, wobei der wiederholbare Prozess ein wiederholbarer Produktionsprozess ist, der in einem großflächigen Baugebiet durchgeführt wird.

6. Verfahren nach Anspruch 5, ferner umfassend:
Bestimmen einer oder mehrerer Anpassungen des wiederholbaren Produktionsprozesses aus einer vorbestimmten Menge empfohlener Anpassungen für einen wiederholbaren Produktionsprozess in einem großflächigen Baugebiet auf der Grundlage der identifizierten einen oder mehreren Abweichungen bei der an einem oder mehreren POIs in dem wiederholbaren Produktionsprozess verbrachten Zeit.

7. Verfahren nach Anspruch 6, wobei die empfohlenen Anpassungen zumindest teilweise auf der Dauer, dem Zeitpunkt und dem Ort von Stopps in dem wiederholbaren Prozess beruhen.

8. Verfahren nach Anspruch 6 oder Anspruch 7, wobei die empfohlenen Anpassungen zumindest teilweise auf den Standortdaten und Zeitinformationen von mehr als einem Fahrzeug beruhen, das in der Umgebung des Fahrzeugs betrieben wird.

9. Verfahren nach einem der Ansprüche 6, 7 oder 8, wobei das Verfahren ferner umfasst:
Veranlassen, dass eine Anzeige der bestimmten einen oder mehreren Anpassungen des Produktionsprozesses über eine grafische Benutzerschnittstelle, GUI, auf einer Anzeige einer elektronischen Vorrichtung bereitgestellt wird.

10. Computerimplementiertes Verfahren zum Trainieren eines Modells für maschinelles Lernen zum Bestimmen einer Anzahl von Interessenfoki eines wiederholbaren Prozesses, wobei das Trainingsverfahren umfasst:
Durchführen eines Verfahrens nach einem der Ansprüche 1 bis 9; und
Verwenden einer Ausgabe des Vergleichs einer oder mehrerer Datenpunktteilmengen der Standortdaten mit einer oder mehreren Teilmengen von Datenpunkten, die vorbestimmten Interessenfoki zugeordnet sind, zum Trainieren des Modells für maschinelles Lernen zum Erkennen von Interessenfoki.

11. Computerimplementiertes Verfahren zum Trainieren eines Modells für maschinelles Lernen zum Identifizieren einer oder mehrerer Abweichungen bei der an einem oder mehreren POIs in einem wiederholbaren Prozess verbrachten Zeit, wobei das Trainingsverfahren umfasst:
Durchführen eines Verfahrens nach einem der Ansprüche 1 bis 9; und
Verwenden der Ausgabe eines Vergleichs von Zeitinformationen, die einem der bestimmten Interessenfoki zugeordnet sind, mit Zeitinformationen, die einem oder mehreren der vorbestimmten Interessenfoki zugeordnet sind, zum Trainieren des Modells für maschinelles Lernen zum Erkennen von Abweichungen bei der an einem oder mehreren POIs verbrachten Zeit.

12. Computerprogramm, das Programmcode-Mittel umfasst, zum Durchführen des Verfahrens nach einem der Ansprüche 1 bis 9 oder 10 oder 11, wenn das Programm auf einem oder mehreren Prozessoren oder auf einer Verarbeitungsschaltung eines Geräts ausgeführt wird.

13. Gerät, umfassend:
einen Speicher;
einen oder mehrere Prozessoren;
ein Steuersystem; und
einen Computercode,
wobei der Computercode, wenn er aus einem Speicher geladen und von dem einen oder den mehreren Prozessoren ausgeführt wird, das Steuerungssystem so konfiguriert, dass das Steuerungssystem das Gerät dazu veranlasst, ein Verfahren nach einem der Ansprüche 1 bis 9 oder 10 oder 11 zu implementieren.

## Revendications

1. Procédé mis en œuvre par ordinateur pour indiquer des écarts de temps passé au niveau d'un ou de plusieurs points d'intérêt, POI, dans un processus répétitif réalisé par une pluralité de véhicules, le procédé comprenant :
la réception de données de localisation (S1) comprenant une pluralité de points de données, chaque point de données correspondant à une position géographique marquée dans le temps rapportée par un véhicule, dans lequel les données de localisation comprennent un flux de données GPS en temps réel pour chaque véhicule de la pluralité de véhicules ;
le traitement (S2) des données de localisation pour déterminer au moins un sous-ensemble de points de données qui est indicatif d'un point d'intérêt, POI, candidat pour le processus répétitif, dans lequel le POI candidat est identifié comme un groupe d'emplacements d'arrêt de véhicule détectés en utilisant un algorithme de regroupement par apprentissage non supervisé ;
la comparaison (S3) du sous-ensemble de points de données déterminé avec un ou plusieurs sous-ensembles de points de données associés à des POI prédéterminés d'un processus répétitif ;
sur la base d'un résultat de la comparaison :
l'identification (S4) d'un nombre de POI du processus répétitif ;
la comparaison d'informations temporelles (S5) associées à l'un des POI déterminés du processus répétitif avec des informations temporelles associées aux un ou plusieurs POI prédéterminés, et sur la base d'un résultat de la comparaison d'informations temporelles,
l'identification (S6) d'un ou de plusieurs écarts de temps passé au niveau d'un ou de plusieurs POI dans le processus répétitif, **caractérisé en ce que** le procédé comprend la construction d'un graphe où des POI candidats sont des nœuds et l'ordre dans lequel les véhicules se déplacent entre des nœuds est utilisé pour déterminer des arêtes de graphe, dans lequel un algorithme est utilisé pour trouver des cycles simples dans le graphe, et dans lequel si ces cycles sont répétés au-dessus d'un seuil pendant une certaine quantité de temps, le procédé détermine que les nœuds dans lesdits cycles sont lesdits POI.

2. Procédé selon la revendication 1, dans lequel le processus répétitif est un processus répétitif réalisé par une pluralité de véhicules qui comprend au moins l'un parmi :
un processus de production répétitif ;
un processus de chantier de construction répétitif ;
un processus de site minier répétitif ;
un processus d'usine répétitif ;
un processus portuaire répétitif ;
un processus de dépôt de transport répétitif ; et
un processus aéroportuaire répétitif.

3. Procédé selon la revendication 1 ou la revendication 2, dans lequel une pluralité d'emplacements d'arrêt de véhicule sont déterminés pour le processus répétitif, et les données de localisation et les informations temporelles définissent au moins une liaison entre deux de la pluralité d'emplacements d'arrêt de véhicule.

4. Procédé selon l'une quelconque des revendications précédentes, dans lequel le procédé comprend en outre :
l'indication des un ou plusieurs écarts identifiés de temps passé au niveau d'un ou de plusieurs POI dans la production via une interface utilisateur graphique, GUI, fournie sur un affichage d'un dispositif électronique.

5. Procédé selon la revendication 4, dans lequel le processus répétitif est un processus de production répétitif réalisé dans une zone de construction à grande échelle.

6. Procédé selon la revendication 5, comprenant en outre : sur la base des un ou plusieurs écarts identifiés de temps passé au niveau d'un ou de plusieurs POI dans le processus de production répétitif, la détermination d'un ou de plusieurs ajustements du processus de production répétitif à partir d'un ensemble prédéterminé d'ajustements recommandés pour un processus de production répétitif dans une zone de construction à grande échelle.

7. Procédé selon la revendication 6, dans lequel les ajustements recommandés sont au moins en partie basés sur la durée, la chronologie et l'emplacement d'arrêts dans le processus répétitif.

8. Procédé selon la revendication 6 ou la revendication 7, dans lequel les ajustements recommandés sont au moins en partie basés sur les données de localisation et les informations de chronologie de plus d'un véhicule fonctionnant au voisinage du véhicule.

9. Procédé selon l'une quelconque des revendications 6, 7 ou 8, dans lequel le procédé comprend en outre :
le fait de provoquer une indication des un ou plusieurs ajustements déterminés du processus de production via une interface utilisateur graphique, GUI, devant être fournie sur un affichage d'un dispositif électronique.

10. Procédé mis en œuvre par ordinateur d'apprentissage d'un modèle d'apprentissage automatique pour déterminer un nombre de points d'intérêt d'un processus répétitif, le procédé d'apprentissage comprenant :
la réalisation d'un procédé selon l'une quelconque des revendications 1 à 9 ; et
l'utilisation d'un résultat de la comparaison d'un ou de plusieurs sous-ensembles de points de données des données de localisation avec un ou plusieurs sous-ensembles de points de données associés à des points d'intérêt prédéterminés pour entraîner le modèle d'apprentissage automatique à détecter des points d'intérêt.

11. Procédé mis en œuvre par ordinateur d'apprentissage d'un modèle d'apprentissage automatique pour identifier un ou plusieurs écarts de temps passé au niveau d'un ou de plusieurs POI dans un processus répétitif, le procédé d'apprentissage comprenant :
la réalisation d'un procédé selon l'une quelconque des revendications 1 à 9 ; et
l'utilisation du résultat d'une comparaison d'informations temporelles associées à l'un des points d'intérêt déterminés avec des informations temporelles associées à un ou plusieurs des points d'intérêt prédéterminés pour entraîner le modèle d'apprentissage automatique à détecter des écarts de temps passé au niveau d'un ou de plusieurs POI.

12. Programme informatique comprenant des moyens de code de programme pour réaliser le procédé selon l'une quelconque des revendications 1 à 9 ou 10 ou 11 lorsque ledit programme est exécuté sur un ou plusieurs processeurs ou sur un circuit de traitement d'un appareil.

13. Appareil comprenant :
une mémoire ;
un ou plusieurs processeurs ;
un système de commande ; et
un code informatique,
dans lequel le code informatique, lorsqu'il est chargé à partir de la mémoire et exécuté par les un ou plusieurs processeurs, configure le système de commande pour amener l'appareil à mettre en œuvre un procédé tel que revendiqué dans l'une quelconque des revendications 1 à 9 ou 10 ou 11.
